# EUROPEAN PATENT APPLICATION

(11) **EP 0 901 952 A1**
(43) Date of publication of application: **17.03.1999**
(21) Application number: 98610034.5
(22) Date of filing: 08.09.1998
(51) Int. Cl.: B62B 3/02, B65D 19/12

(54) **A container with a locking device for a gate**

(30) Priority: 09.09.1997 DK 102897
(71) Applicant: VSI Holding A/S, 5500 Middelfart (DK)
(72) Inventor: Mogensen, Erling Kristen, 5500 Middelfart (DK); Nesting, Erik Markvard Grubbe, 5500 Middelfart (DK)
(74) Representative: Wittrup, Flemming

(57) **Abstract**

A container (1) comprising at least two opposite, parallel walls (3,4) with a yielding mutual position, wherein a detachable or hinged door (6) is arranged between the two opposite walls (3, 4). The container is provided with a locking device to retain the door (6) in its closed position, said locking device comprising a spring-loaded locking pawl (11) arranged protrudingly from the door (6) or from the adjoining wall (3) and a complementary hole (12) arranged in the other part so that the locking pawl (11) is inserted in the hole (12) when the door (6) is closed. An inclined face (9, 14, 16, 20) is arranged to move the locking pawl (11) when the door (6) is closed, and the locking device comprises a male part arranged protrudingly from the door (6) or from the adjoining wall (3) and a female part arranged on the other part. The male part and the female part are so arranged with respect to each other that these guide the door (6) to correct position with respect to the adjoining wall via inclined guide faces when the door (6) is closed, thereby ensuring that the locking pawl (11) is inserted into the hole (12). Furthermore, the male part and the female part are so arranged that bending of the adjoining wall (3) with respect to the door (6) is prevented when the door (6) is closed.

## Description

The invention relates to a container of the type defined in the introductory portion of claim 1.

Such a container is known e.g. from SE-B-376 400, which discloses a container comprising a bottom, two side walls, a rear wall and a front door which is hinged at one side to one of the two side walls. A locking device is arranged at the other side of the front door and comprises a spring-loaded locking pawl, which is movable in the plane of the front door, and which, in the locked state, is inserted in a complementary hole in the outer frame of the side wall. A transverse arm is arranged on the locking pawl, and this arm serves as a handle by means of which the locking pawl may be pulled manually backwards when the front door is to be opened. For closing the front door, the locking pawl also has to be pulled backwards, which also takes place manually. To ensure that the front door remains in its closed and locked position, a gripper strap is arranged on the front door, said gripper strap gripping the outer frame of the side wall to prevent movement thereof with respect to the front door.

US A 4 275 665 discloses a container having detachable doors, said container being provided with corresponding locking devices which are arranged on the detachable doors.

The containers of SE B 376 400 and US A 4 275 665 consist of several different parts (bottom, side walls, rear wall, front door/front wall, etc.) which are hinged to each other in different ways. Because of all these hinged parts, the container is "loose" in the construction, or put differently: all the parts assume yielding mutual positions. Therefore, the container does not always assume its correct position with exactly 90° between the various parts. This applies in particular when one of the sides of the container is open.

Because of the "loose" construction of the container, it may be problem in the known containers to guide the locking pawl into the complementary hole, as this must be done by manually moving the parts of the container with respect to each other until the quite correct position has been found.

Furthermore, the known containers require that the locking pawl is pulled manually backwards before the door can be closed, and there is a wish on the part of the users of the containers that these must be capable of being closed automatically.

Accordingly, the object of the invention is to provide a container of the type mentioned in the opening paragraph, said container being provided with a locking device which corrects obliquities of the container, if any, during the closing of the door, and which is adapted such that the door can be closed automatically. The locking device must moreover prevent movement of the part adjoining the door when the door is closed.

This is achieved by arranging the container as stated in the characterizing portion of claim 1.

In principle, the locking device is constructed as a latch lock with a locking pawl which is guided to a complementary hole into which it extends when the door is closed.

When arranging the locking device for the container as stated in claim 1, it is ensured that the container is aligned when the door is closed, and also that the simple latch mechanism can easily be automated when the door is closed, as it merely takes a rotational movement to close the door. Further, the locking device prevents movement of the wall adjoining the door when the door is closed.

Preferably, the locking pawl is arranged protrudingly from the door, and its complementary hole is arranged in the wall of the container. This position is primarily the result of the wish that there must be no parts which extend into the opening of the container when the door is open, so that there is free access to the interior of the container.

In a preferred embodiment, the protruding male part consists of a pipe member rounded at the ends and welded on the wall of the container, and the female part consists of a U-shaped strap secured to the door, the opening of the strap corresponding to the largest dimensions of the rounded pipe member. This structure is particularly simple, and simple constructional elements, such as pipe and bar iron, may be used.

The locking device is primarily intended for use in connection with containers of the type which are shown in SE B 376 400, that is containers comprising two side walls and a bottom plate which each are hinged to a rear wall, and a front door which is hinged to a front edge of one of the side walls.

The invention will now be explained more fully with reference to the drawing, in which
fig. 1 shows a container according to the invention,
fig. 2 shows the locking device according to a preferred embodiment, and
figs. 3-8 show alternative embodiments of the locking device.

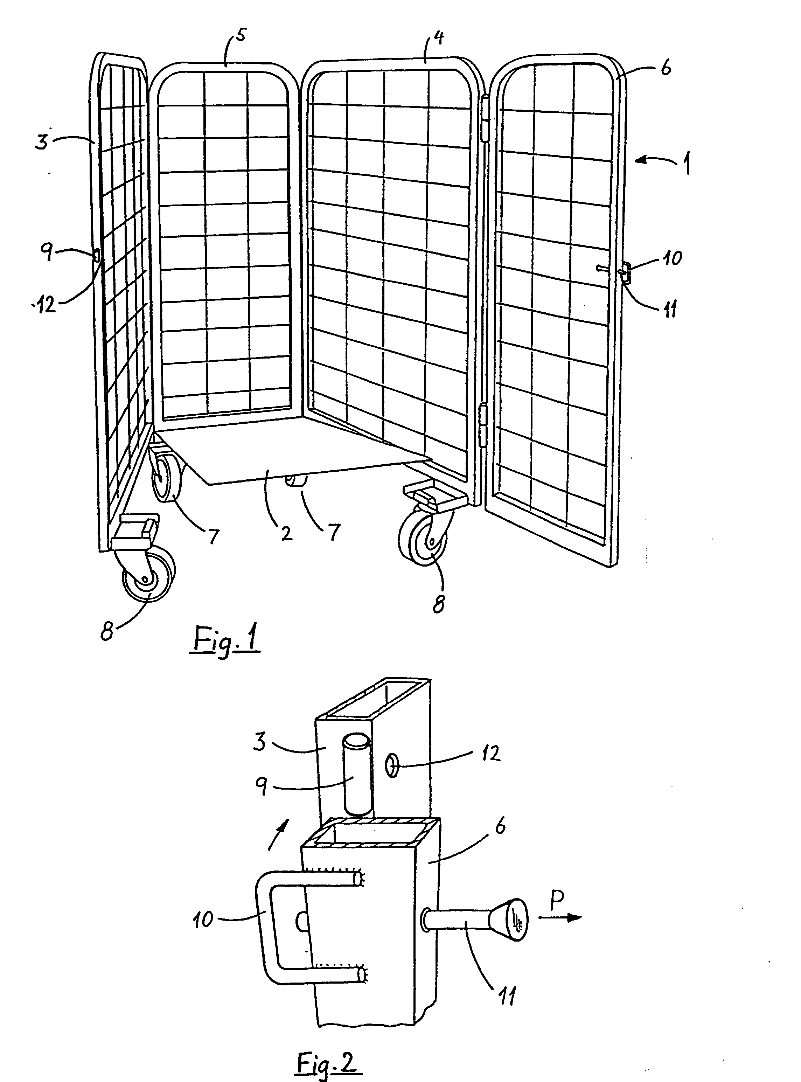

Fig. 1 shows a container 1 which comprises a bottom 2, two side walls 3 and 4, a rear wall 5 and a door 6. The rear wall 5 is provided with two fixed wheels 7 at the bottom, while each of the side walls 3, 4 is provided with a pivotable wheel 8 at their front ends. The side walls 3, 4 of the container 1 are hinged to the rear wall 5 and may thus be pivoted out to the sides, as shown. The bottom 2 is also hinged to the rear wall 5 and may be pivoted up to a vertical position when the side walls 3, 4 have been pivoted out to the sides. The bottom 2 is shown in a slightly raised position.

This type of container is used e.g. for the transport of milk cartons from dairy to supermarket where the consumer takes the milk cartons directly from the container. When the container 1 is empty, the bottom 2 is pivoted up to a vertical position, and the side walls 3, 4 are pivoted out to the sides. Then, several containers of the same type may be pushed into one another so that the empty containers may be transported in a compact manner.

As mentioned, the container 1 is provided with a door 6 which is closed when the container 1 is filled with e.g. milk cartons. The door 6 is provided with a locking device which comprises a male part in the form of a welded pipe member 9, a female part in the form of a catch strap 10, a spring-loaded locking pawl 11 and a hole 12 complementary therewith.

The container is preferably made of metal, as the rear wall 5, the side walls 3 and 4 and the door 6 each consist of an outer frame of a hollow steel profile of rectangular cross-section, filled by a grating, as shown. The bottom 2 may consist of a metal plate or of a corresponding grating.

Fig. 2 shows sections of the side wall 3 and the door 6, said sections comprising the parts of the locking device, viz. the welded pipe member 9, the catch strap 10, the spring-loaded locking pawl 11 and the hole 12 complementary therewith.

As will appear, the pipe member 9 is rounded at the top and at the bottom so as to exhibit inclined engagement faces on all sides, and it is secured to the side wall 3 at the edge facing the door 6. In the preferred embodiment, the catch strap 10 has a circular cross-section so that this, too, exhibits inclined engagement faces.

The locking pawl 11 is mounted in a spring-loaded manner in the frame of the door 6, as is known, which will not be described in detail here. The locking pawl 11 is solid, and, at one end, it has an expansion which serves as a handle when the door is to be opened by a pull in the direction of the arrow P.

The hole 12, which is complementary with the locking pawl 11, is drilled in the frame of the side wall 3.

During packing of the container 1, the door 6 is open while the bottom 2 has been pivoted down and the side walls 3 and 4 have been pivoted in. When the container 1 is fully packed, the door is pivoted from the open position to the closed position. As the container 1 consists of many hinged parts (bottom 2, side walls 3 and 4, rear wall 5 and door 6), these do no assume a 100% correct position before closing, but may be twisted slightly with respect to each other. However, the locking device, which basically works like an ordinary latch lock, aligns the container 1 before the locking pawl 11 is moved into the complementary hole 12. This is described more fully below.

When the door 6 is almost closed, the catch strap 10, which is mounted on the door 6, will hit the welded pipe member 9. The catch strap 10 and the pipe member 9 are rounded on all edges, and in the further movement of the door 6 it will therefore be guided to the correct position so that the locking pawl 11 is moved into the hole 12. During this movement the locking pawl 11 will also hit the welded pipe member, whereby the pawl is urged inwards in the direction of the arrow P and jumps out again when it is aligned with the hole 12.

With the shown embodiment of the locking device all minor obliquities of the container 1 will be corrected when the door 6 is closed; what may happen is:
if the side wall 3 is too far in (to the right in fig. 2), the frame of the door 6 will hit the welded pipe member 9, causing the side wall 3 to be pressed out by the further movement of the door 6,
if the side wall 3 is too far out (to the left in fig. 2), the left inner side of the catch strap 10 will hit the welded pipe member 9, causing the side wall 3 to be pulled in by the further movement of the door 6,
if the side wall 3 is too far up, the upper inner side of the catch strap 10 will hit the rounded top of the welded pipe member 9, causing the side wall 3 to be pressed down by the further movement of the door 6,
if the side wall is too far down, the lower inner side of the catch strap 10 will hit the rounded bottom of the welded pipe member 9, causing the side wall 3 to the pressed up by the further movement of the door 6.

Of course, the side wall 3 may also have been put of position in more than one direction, so that a combination of the above situations will be present.

Normally, the obliquity in the container 1 before closing of the door 6 will be of the order of a few millimetres, and this obliquity may easily be corrected by the shown locking device.

Since, for closing, the door 6 is merely to be snapped shut, the container of the invention is suitable for use in an automated packing system which first packs the container 1 and then closes the door 6 by a simple rotational movement.

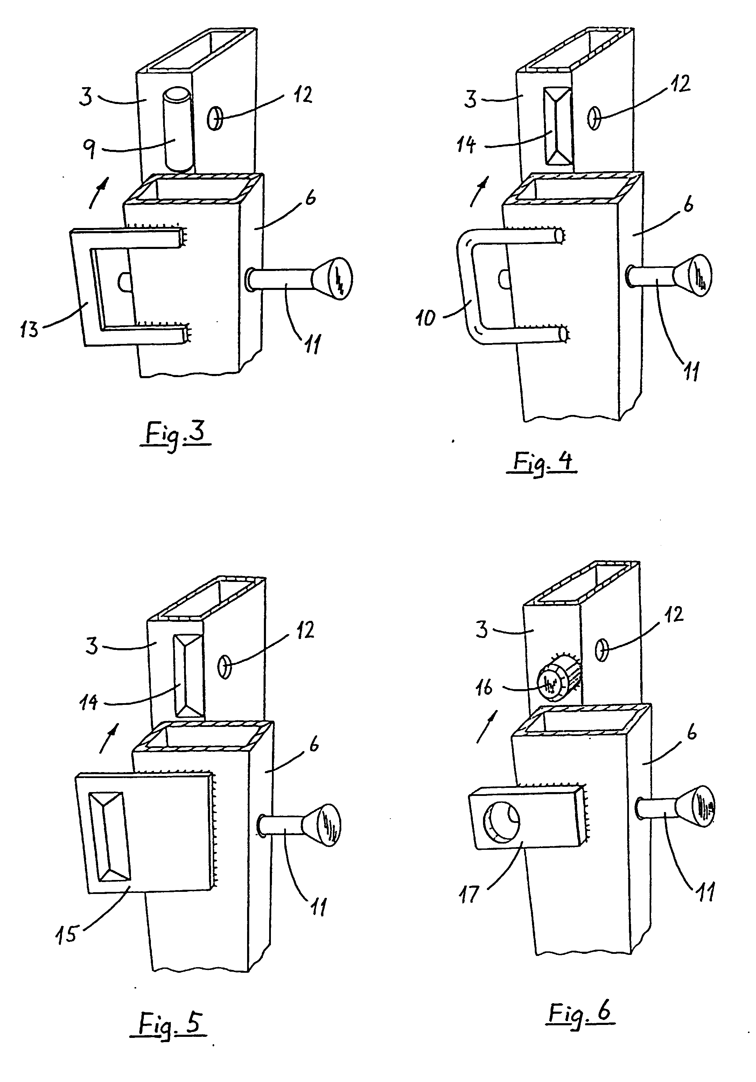

Figs. 3-8 show alternative embodiments of a locking device for use in a container according to the invention.

In fig. 3 the male part again consists of a pipe member 9 which is welded on the frame of the side wall 3, and the locking pawl 11 is again arranged under spring load in the frame of the door 6. The catch strap 12 is changed, however, as it consists of a U-shaped flat iron member. In this embodiment the catch strap 12 is not provided with an inclined engagement face, and the locking device can thus just correct minor obliquities of the container. The embodiment shown in fig. 4 corresponds to the embodiment shown in fig. 2, except that the male part is formed by a welded wedge-shaped part 14 instead of a pipe member 9. With this embodiment it is possible to correct major obliquities of the container, as the wedge faces may be given an arbitrary length.

In fig. 5 the male part is again formed by a wedge-shaped part 14, while the catch strap consists of a plate 15 with a depressed area which is complementary with the wedge shape of the male part.

Fig. 6 shows an embodiment in which the male part consists of a forwardly extending rounded pin 16 on the frame of the side wall 3, while the female part consists of a plate 17 with a circular hole whose diameter corresponds to the diameter of the forwardly extending pin 16.

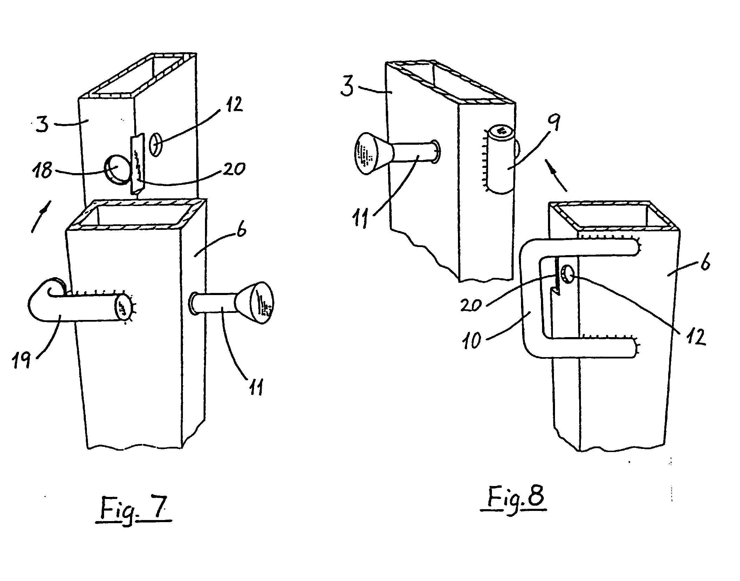

In the embodiment shown in fig. 7 the male part is positioned on the door 6 and the female part is positioned on the side wall 3. The female part consists of a hole 18 which is drilled in the front side of the frame of the side wall 3. The male part consists of a bent rod profile 19, which has a rounded outer end, and whose diameter corresponds to the diameter of the hole 18. The frame of the side wall 3 is moreover provided with an inclined engagement face 20 for the locking pawl 11 to ensure that this is pressed when the door is closed.

In fig. 8 the locking pawl 11 is arranged under spring load in the frame of the side wall 3, while the complementary hole 12 is arranged in the frame of the door 6. This embodiment, too, is provided with an inclined engagement face to ensure that the locking pawl 11 is pressed in during closing of the door 6.

As will appear from the foregoing, there are many possible variations in the construction of the male and female parts of the locking device and in the positions of the locking pawl 11 and its complementary hole 12.

## Claims

1. A container (1) comprising at least two opposite, parallel walls (3, 4) with a yielding mutual position, wherein a detachable or hinged door (6) is arranged between the two opposite walls (3, 4), said container being provided with a locking device to retain the door (6) in its closed position, said locking device comprising a spring-loaded locking pawl (11) arranged protrudingly from the door (6) or from the adjoining wall (3) and a complementary hole (12) arranged in the other part so that the locking pawl (11) is inserted in the hole (12) when the door (6) is closed, **characterized** in that an inclined face (9, 14, 16, 20) is arranged to move the locking pawl (11) when the door (6) is closed, and that the locking device comprises a male part arranged protrudingly from the door (6) or from the adjoining wall (3) and a female part arranged on the other part, said male part and female part being so arranged with respect to each other that these guide the door (6) to correct position with respect to the adjoining wall (3) via inclined guide faces when the door (6) is closed, thereby ensuring that the locking pawl (11) is inserted into the hole (12), said male part and female part being moreover arranged such that movement of the adjoining wall (3) with respect to the door (6) is prevented when the door (6) is closed.

2. A container according to claim 1, **characterized** in that the locking pawl (11) is arranged protrudingly from the door (6) and is movable in the plane of the door, and that the complementary hole (12) is arranged in the adjoining wall (3).

3. A container according to claim 1 or 2, **characterized** in that the male part comprises a pipe member (9) rounded at the ends and arranged protrudingly from the adjoining wall (3), the longitudinal direction of the pipe member (9) extending in parallel with the side face of the adjoining wall (3), and that the female part comprises a U-shaped strap (10) secured to the door (6), the opening of said strap (10) corresponding to the largest dimensions of the pipe member (9).

4. A container according to any one of claims 1-3, **characterized** in that the container comprises two side walls (3, 4) and a bottom plate (2), which each are hinged to a rear wall (5), said door (6) being hinged to a front edge of one of the side walls (3, 4).
